# EUROPEAN PATENT APPLICATION

(11) **EP 4 138 063 A1**
(43) Date of publication of application: **22.02.2023**
(21) Application number: 22183609.1
(22) Date of filing: 07.07.2022
(51) Int. Cl.: G09B 5/10, G09B 7/06, G09B 19/00

(54) **GAME-BASED LESSON PLANS AND LEARNING**

(30) Priority: 17.08.2021 US 202117404435
(71) Applicant: Sony Interactive Entertainment LLC, San Mateo, CA 94404 (US)
(72) Inventor: JUENGER, Elizabeth, California 94404 (US); DANALA, Punitha, California 94404 (US)
(74) Representative: D Young & Co LLP

(57) **Abstract**

A map regarding one or more virtual actions may be stored in memory. The virtual actions may be associated with a set of data associated with performing a corresponding action in a real-world environment. Data regarding a action by a user in the real-world environment may be captured. A current progress level of the user within the virtual environment is identified. The current identified progress level is associated with one or more available virtual actions. The captured data may correspond to an identified one of the available virtual actions based on a match between the captured data and the set of data associated with the identified virtual action as indicated by the map. A search of one or more databases for instructions corresponding to the identified virtual action is initiated.

## Description

### BACKGROUND OF THE INVENTION

### 1. Field of the Invention

The present invention generally relates to providing lessons in virtual environments. More specifically, the present invention relates to virtual lesson plans including game elements associated with activities in a virtual environment.

### 2. Description of the Related Art

Virtual learning may include variations of asynchronous or synchronous online lessons where a live or recorded teacher (human or computer AI-based) guides the students through slides, video clips, and/or participatory interactions in a structured lesson plan. Asynchronous lessons plans may be entirely recorded or pre-structured such that students are merely viewing passively or at most may be required to answer structured questions regarding what was presented. Synchronous lesson plans with a human teacher may be require one- or two-way communication, whereby students and teachers may interact during the lesson.

With remote learning becoming a more utilized tool than ever before, it is important to provide well-designed online learning experiences that may help students stay focused, as well as absorb and retain knowledge. It is known that learning through games and participation can help students be more engaged. For example, studies have shown that such students may improve their memory when topics are learned through games and other creative methods, such as song and dance.

There is, therefore, a need in the art for improved systems and methods of providing tools to customize virtual lesson plans by integrating interactive elements.

### SUMMARY OF THE CLAIMED INVENTION

Embodiments of the present invention include systems and methods for creating customized virtual lesson plans that integrate game elements. A memory stores a plurality of game elements in memory, each game element associated with one or more activities in a virtual environment. A request to create a lesson is sent over a communication network from a user device. The request specifies how one or more selected game elements from the stored game elements are incorporated into lesson content. A lesson file is generated based on the request. The lesson file includes the selected game elements incorporated into the lesson content as specified by the request. The lesson file is launched in the virtual environment that includes one or more avatars. The selected game elements are presented for interaction by the avatars within a presentation of the lesson content

### BRIEF DESCRIPTION OF THE DRAWINGS

FIG. 1 illustrates an exemplary network environment in which a system for providing lessons in virtual environments may be implemented.
FIG. 2 illustrates an exemplary uniform data system (UDS) that may be used to provide lessons in virtual environments.
FIG. 3 illustrates an example table of various objects and associated events, according to an aspect of the present disclosure;
FIG. 4 is a flowchart illustrating an exemplary method for providing lessons in virtual environments.
FIG. 5 is a block diagram of an exemplary electronic entertainment system that may be used in embodiments of the present invention.

### DETAILED DESCRIPTION

Embodiments of the present invention include systems and methods for creating customized virtual lesson plans that integrate game elements. A memory stores a plurality of game elements in memory, each game element associated with one or more activities in a virtual environment. A request to create a lesson is sent over a communication network from a user device. The request specifies how one or more selected game elements from the stored game elements are incorporated into lesson content. A lesson file is generated based on the request. The lesson file includes the selected game elements incorporated into the lesson content as specified by the request. The lesson file is launched in the virtual environment that includes one or more avatars. The selected game elements are presented for interaction by the avatars within a presentation of the lesson content

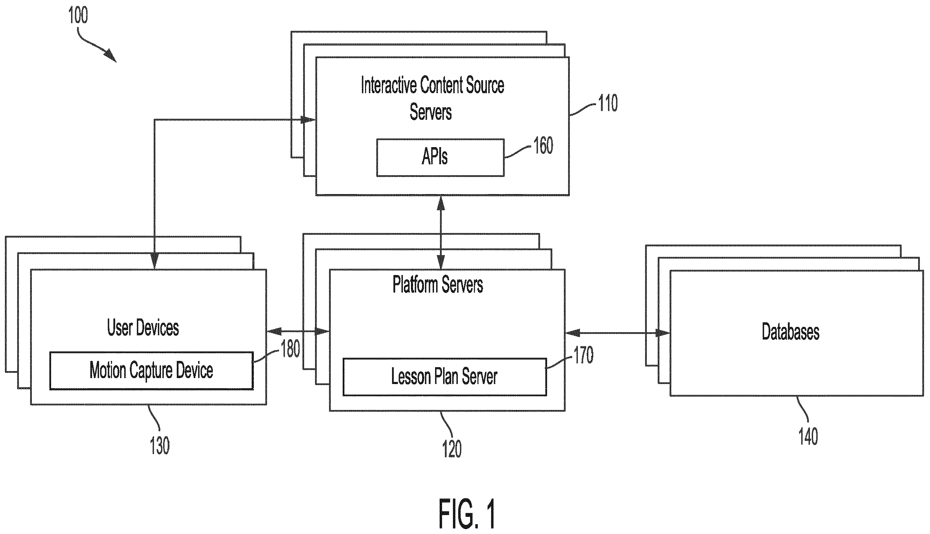

FIG. 1 illustrates an example network environment 100 in which a system providing lessons in virtual environments. The network environment 100 may include one or more interactive content source servers 110 that provide streaming content (e.g., interactive content titles, game titles, interactive video, podcasts, etc.), one or more platform servers 120, one or more user devices 130, and one or more databases 140.

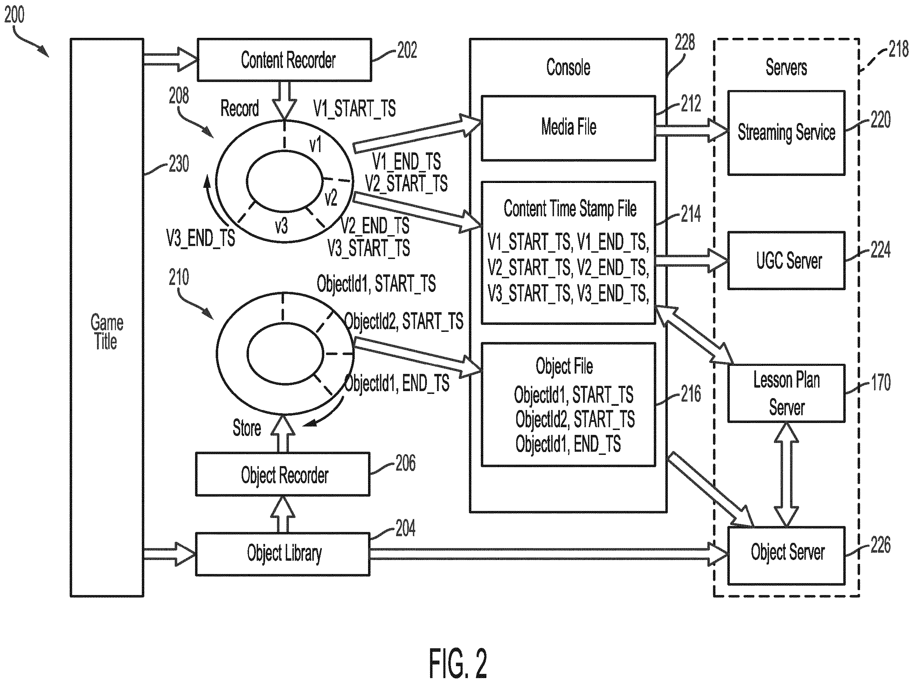

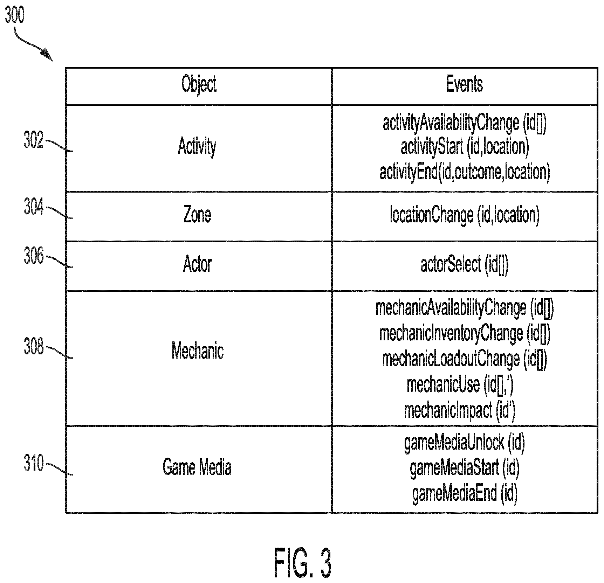

Interactive content source servers 110 may maintain, stream, and host interactive media available to stream on a user device 130 over a communication network. Such interactive content source servers 110 may be implemented in the cloud (*e.g.,* one or more cloud servers). Each media may include one or more sets of object data that may be available for participation with (*e.g.,* viewing or interacting with an activity) by a user. Data about the object shown in the media may be stored by the interactive content source servers 110, platform servers 120 and/or the user device 130, in an object file 216 ("object file"), as will be discussed in detail with respect to FIGS. 2 and 3.

The platform servers 120 may be responsible for communicating with the different interactive content source servers 110, databases 140, and user devices 130. Such platform servers 120 may be implemented on one or more cloud servers.

Content source servers 110 may maintain and provide a variety of digital content available for distribution. The content source servers 110 may be associated with any content provider that makes its content available for access over a communication network. Such content may include not only digital video and games, but also other types of digital applications and services. Such applications and services may include any variety of different digital content and functionalities that may be provided to user devices 150. An example of content source servers 110 may be an Internet website that provides downloadable content and/or streaming content. The content provided by the content source servers 110 can include any type of multimedia content, such as movies, games, static/dynamic content, pictures, social media content, social media websites, etc. Such content may correspond to real-world or virtual environments and elements. The user device 150 may include a plurality of different types of computing devices. In some embodiments, content data is transmitted from the content source servers 110 to a computing device, where the content data is then rendered by the computing device in a format suitable for use by user device 150.

The content from content source server 110 may be provided through a content provider server API 160, which allows various types of content sources server 110 to communicate with other servers in the network environment 100 (e.g., user devices 150). The content provider server API 160 may be specific to the particular language, operating system, protocols, etc. of the content source server 110 providing the content, as well as the user devices 150. In a network environment 100 that includes multiple different types of content source servers 110, there may likewise be a corresponding number of content provider server APIs 120 that allow for various formatting, conversion, and other cross-device and cross-platform communication processes for providing content and other services to different user devices 150, which may use different operating systems, protocols, etc., to process such content. As such, applications and services in different formats may be made available so as to be compatible with a variety of different user device 150.

Content source servers 110 may also be inclusive of online servers associated with social media applications, which may be programmed to provide one or more social media graphs the user in order to identify social contacts of the user. These users may not be social contacts or socially associated with the user but may have played one or more video games with the user. The friend listing can include additional information about the user's friends, such as depicting games which are owned by each friend, identifying an online status of the friend (e.g. online, offline, inactive, etc.), the friend's last login and its duration, the last game played by the friend, etc. The social network includes user data, which includes data such as user's social graphs, posts, pictures, videos, biographical information, etc.

The content provider server API 160 may further facilitate access of each of the user devices 150 to the content hosted or services provided by the content source servers 110, either directly or via platform servers 120. Additional information, such as metadata, about the accessed content or service can also be provided by the content provider server API 160 to the user device 150. As described below, the additional information (i.e. metadata) can be usable to provide details about the content or service being provided to the user device 150. In some embodiments, the services provided from the content source servers 110 to the user device 150 via the content provider server API 160 may include supporting services that are associated with other content or services, such as chat services, ratings, and profiles that are associated with a particular game, team, community, etc. In such cases, the content source servers 110 may also communicate with each other via the content provider server API 160.

The platform servers 120 may include a server that provides resources, files, etc., related to the content from content source servers 110, including various content and service configurations, to user devices 150. The platform servers 120 can also be called upon by the user devices 150 that request to access specific content or services. Platform servers 120 may include universe management servers, game servers, streaming media servers, servers hosting downloadable content, and other content delivery servers known in the art.

Lesson plan server 170 may include any data server known in the art that is capable of receiving data from the user device 150. The content rendered by the lesson plan server 140 can be for essentially any type of computer application and may include one or more types of content such as game, movie, audio, images, multimedia, among others. In some embodiments, the content, or portions thereof, is generated by the lesson plan server 140. In some embodiments, the content, or portions thereof, is streamed from content source server 110 over network 100 to the computing device. In some embodiments, the content, or portions thereof, is streamed from a cloud gaming infrastructure over the network 100 to the computing device. The infrastructure may direct various types of content to be transmitted from the content source servers 110 over the network 100 to the computing device.

In an exemplary embodiment, lesson plan server 140 may store or reference game elements that include one or more activities, stored as object data, in virtual environments associated with one or more interactive content titles. The lesson plan server 140 may receive a request to create a lesson over a communication network from a user device 130. The request may further specify how and where selected game elements are incorporated into lesson content.

For example, for a lesson plan on the subject of Egypt, a teacher may incorporate activities in games that are set in Egypt to point out historical references in those games. The teacher may incorporate the game activity at the beginning, middle, or end of the lesson plan, and may be provided the option to incorporate the game activity at any time during the lesson plan. In an exemplary implementation, the teacher may select one or more scenes associated with certain game titles to use as a virtual environment in which the lesson may take place. In addition, other media content (*e.g.,* still photos, text, embedded video, links) may be added to the lesson plan and cued up to present during the lesson session under control of the teacher, who may also specify points in which they plan to provide live narration and explanation of various elements thereof. Finally, the teacher may specify one or more in-game activities that applies the knowledge from the lesson plan, as well as in-game rewards or advantages for demonstrating a firm grasp of such knowledge.

In other embodiments, a teacher may provide a tutorial specifically on how to play a game title successfully, including how to compete in specific types of in-game competitions or how to beat a particular in-game challenge. Such a tutorial may include live demonstrations by the teacher, as well as explanations provided during video clips of actual gameplay, images providing close-up views, maps of the in-game environment, etc. Such explanations may include history of the game, history of specific players, personal gameplay experiences, tips on performing skills, etc.

The lesson plan is therefore generated based on such teacher input and presented to students in an online, virtual environment. Depending on the specific teacher input, the lesson plan may include references to the selected game elements at different points during the presentation of the lesson content. Once an associated lesson file is launched and the game element is presented for interaction, the students are engaged in the game activity as one or more avatars within the presentation of the lesson content. In some examples, the user devices associated with the students may continue to hear the teacher speak overlaying the game activity being displayed or the game activity is displayed in part of the presentation of the lesson content and other aspects of the lesson content are being displayed concurrently. The game activity may end, and another game activity associated with another interactive content title or game title may be initiated in a same lesson content. Furthermore, the lesson content may include at last one pre-recorded content and also designations for content to be presented live during play of the lesson file by an avatar associated with a teacher role.

In some examples, the selected game element for interaction by the avatars is associated with a competition or testing content. The competition or testing content may be associated with an interactive content source server 110 or the lesson plan server 170 that provides a quizzing platform based on content that was covered in the lesson file. Such results may be stored in activity files generated by unified data systems (described in further detail in relation to FIG. 2) and may further be used to collect results of the interaction with the competition or testing content for analysis.

Furthermore, machine learning may be applied to the results that have been collected over time to identify one or more patterns associated with the selected game element or the lesson content. For example, the selected game element is associated with solving a puzzle in an escape room-type of game and the puzzle requires the understanding of multiplication. The students were unable to solve the puzzle under an average time that other players solved the puzzle, all of which is information obtainable through the unified data system. The machine learning algorithm may suggest to the teacher to further expand upon the lesson plan directed at multiplication. Such suggestions may be made in real-time as the students work on the puzzle as patterns emerge and insights are gleaned from the body of student learning data.

In some examples, at least one of the avatars may be evaluated based on interaction associated with the competition or testing content by analyzing the interaction to identify one or more differences from the lesson content. The identified differences may be used to calculate a score for the at least one avatar. For example, the lesson content may teach a history lesson regarding colonial America, and the game activity is a choose your own adventure type game in a virtual environment set in colonial America and that includes characters, events, and other details drawn from colonial America. Various in-game challenges may rely on information from the lesson plan, such that a student that has absorbed the lesson plan is given advantages or is otherwise more capable of competing or succeeding in the virtual environment. Thus, the student may be motivated to focus on the lesson plan in order to obtain such advantages and capabilities for use in the game.

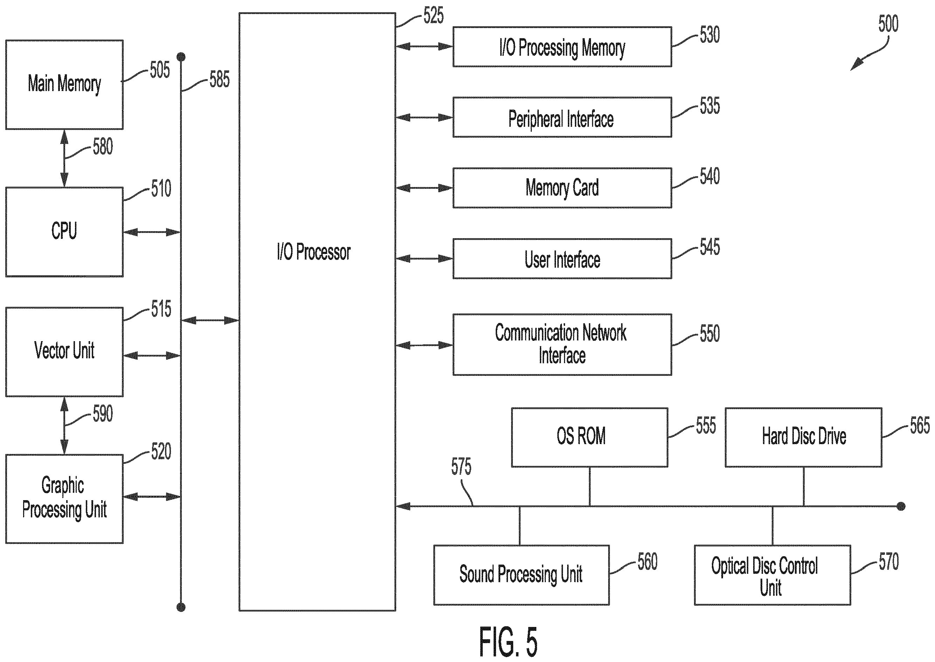

The user device 150 may be a server that provides an internal service (e.g., to other servers) in network environment 100. In such cases, user device 150 may correspond to one of the content source servers 110 described herein. Alternatively, the user device 150 may be a client device that may include any number of different gaming consoles, mobile devices, laptops, and desktops. Such user devices 150 may also be configured to access data from other storage media, such as, but not limited to memory cards or disk drives as may be appropriate in the case of downloaded services. Such user devices 150 may include standard hardware computing components such as, but not limited to network and media interfaces, non-transitory computer-readable storage (memory), and processors for executing instructions that may be stored in memory. These user devices 150 may also run using a variety of different operating systems (e.g., iOS, Android), applications or computing languages (e.g., C++, JavaScript). An exemplary client device 150 is described in detail herein with respect to FIG. 5. Each user device 150 may be associated with participants or other types of spectators of a collection of digital content streams.

In some embodiments, the user device 150 is configured to execute games locally on the processing hardware of a computing device or game console. The games or content can be obtained in any form, such as physical media form (e.g., digital discs, tapes, cards, thumb drives, solid state chips or cards, etc.) or by way of download from the Internet, via a communication network. In some embodiments, the computing device functions as a client in communication over the communication network with the cloud gaming infrastructure. The cloud gaming infrastructure may maintain and execute a video game being played by the user device 150. Inputs received from the user device 150, the controller, and the camera (and other sensors), may be transmitted to the cloud gaming infrastructure, which processes the inputs to affect the game state of the executing video game.

Game data from a video game, such as video data, audio data, and tactile feedback data, can be transmitted from the content source servers 110 to the user devices 150. The computer system may further process the game data before transmission to the appropriate device, or may directly transmit the game data to the appropriate device. For example, video and audio streams may be transmitted to the user devices 150.

The user device 150 may also include or be associated a motion capture device 180. A motion capture device 180 may identify one or more body parts being moved during each movement in a series of movements. The motion capture device 180 may be associated with a teacher user account whereby the teacher is creating a series of movements to be analyzed as a set of movements that can be mirrored by an avatar. The moving avatar may be generated with corresponding body parts animated to move in accordance with each identified movement in the series of movements. Each of the identified movements by the moving avatar may be synchronized to lesson content associated with the respective movement. For example, the lesson content may teach a series of movements, or a dance, as part of the lesson plan. Student user accounts may also attempt to generate their own moving avatar based on their captured motion capture data from motion capture device 180 associated with each of the student user accounts.

The streaming servers 110 may communicate with multiple platform servers 120, though the interactive content source servers 110 may be implemented on one or more platform servers 120. The platform servers 120 may also carry out instructions, for example, receiving a user request from a user to stream streaming media (*i.e.,* games, activities, video, podcasts, User Generated Content ("UGC"), publisher content, etc.). The platform servers 120 may further carry out instructions, for example, for streaming the streaming media content titles. Such streaming media may have at least one object set associated with at least a portion of the streaming media. Each set of object data may have data about an object (*e.g.,* activity information, zone information, actor information, mechanic information, game media information, etc.) displayed during at least a portion of the streaming media.

The streaming media and the associated at least one set of object data may be provided through an application programming interface (API) 160, which allows various types of interactive content source servers 110 to communicate with different platform servers 120 and different user devices 130. API 160 may be specific to the particular computer programming language, operating system, protocols, etc., of the interactive content source servers 110 providing the streaming media content titles, the platform servers 120 providing the media and the associated at least one set of object data, and user devices 130 receiving the same. In a network environment 100 that includes multiple different types of interactive content source servers 110 (or platform servers 120 or user devices 130), there may likewise be a corresponding number of APIs 160.

The user device 130 may include a plurality of different types of computing devices. For example, the user device 130 may include any number of different gaming consoles, mobile devices, laptops, and desktops. Such user device 130 may also be configured to access data from other storage media, such as, but not limited to memory cards or disk drives as may be appropriate in the case of downloaded services. Such devices 130 may include standard hardware computing components such as, but not limited to network and media interfaces, non-transitory computer-readable storage (memory), and processors for executing instructions that may be stored in memory. These user devices 130 may also run using a variety of different operating systems (e.g., iOS, Android), applications or computing languages (e.g., C++, JavaScript). An example user device 130 is described in detail herein with respect to FIG. 5.

The databases 140 may be stored on the platform server 120, the interactive content source servers 110, any of the servers 218 (examples shown in FIG. 2), on the same server, on different servers, on a single server, across different servers, or on any of the user devices 130. Such databases 140 may store the streaming media and/or an associated set of object data. Such streaming media may depict one or more objects (*e.g.,* activities) that a user can participate in and/or UGC (*e.g.,* screen shots, videos, commentary, mashups, etc.) created by peers, publishers of the media content titles and/or third party publishers. Such UGC may include metadata by which to search for such UGC. Such UGC may also include information about the media and/or peer. Such peer information may be derived from data gathered during peer interaction with an object of an interactive content title (*e.g.,* a video game, interactive book, etc.) and may be "bound" to and stored with the UGC. Such binding enhances UGC as the UGC may deep link (*e.g.,* directly launch) to an object, may provide for information about an object and/or a peer of the UGC, and/or may allow a user to interact with the UGC. One or more user profiles may also be stored in the databases 140. Each user profile may include information about the user (*e.g.,* user progress in an activity and/or media content title, user id, user game avatars, etc.) and may be associated to media.

In the example network environment 200 of FIG. 2, an example console 228 and example servers 218 (*e.g.,* a streaming server 220, a UGC server 224, and a lesson plan server 170, and an object server 226) are shown to receive object data and media files recorded by the object recorder 206 and the content recorder 202, respectively. Based on data provided by such a uniform data system, the lesson plan server 170 can be made aware of what in-game objects, entities, activities, and events that users have engaged with, and thus support analysis of in-game activities. Each user interaction may be associated the metadata for the type of in-game interaction, location within the in-game environment, and point in time within an in-game timeline, as well as other players, objects, entities, etc., involved. Thus, metadata can be tracked for any of the variety of user interactions that can occur in during a game session, including associated activities, entities, settings, outcomes, actions, effects, locations, and character stats. Such data may further be aggregated, applied to data models, and subject to analytics. Such a UDS data model may be used to assign contextual information to each portion of information in a unified way across games.

FIG. 2 illustrates an exemplary uniform data system (UDS) 200 that may be used to provide data to a system for providing lessons in virtual environments. FIG. 2 further illustrates an exemplary console 228 (*e.g.,* a user device 150) and exemplary servers 218 (*e.g.,* streaming server 220, an user-generated content (UGC) server 224, a lesson plan server 170, and an object server 226. In one example, the console 228 may be implemented on or in association with the content source server 110, platform servers 120, a cloud server, or on any combination of the servers 218 and servers of FIG. 1. The console 228 may further includes a content recorder 202 and an object recorder 210, described in more detail below, where content (e.g., media) may be recorded and outputted through the console 228. The game titles 230 may be executed on the console 228. Alternatively, or in addition to, the content recorder 202 may be implemented on the platform server 120, a cloud server, or on any of the servers 218.

Such content recorder 202 may receive and record content (*e.g.,* media) from an interactive content title 230 (*e.g.,* interactive content source servers 110) onto a content ring-buffer 208. Such ring-buffer 208 may store multiple content segments (*e.g.,* v1, v2 and v3), start times for each segment (*e.g.,* V1_START_TS, V2_START_TS, V3_START_TS), and end times for each segment (*e.g.,* V1_END_TS, V2_END_TS, V3_END_TS). Such segments may be stored as a media file 212 (*e.g.,* MP4, WebM, etc.) by the console 228. Such media file 212 (*e.g.,* a portion of the streaming media) may be uploaded to the streaming server 220 for storage and subsequent streaming or use, though the media file 212 may be stored on any server, a cloud server, any console 228, or any user device 130. The media file 212 may be uploaded periodically and/or in real-time or close to real-time. Such start times and end times for each segment may be stored as a content time stamp file 214 by the console 228. Such content time stamp file 214 may also include a streaming ID, which matches a streaming ID of the media file 212, thereby associating the content time stamp file 214 to the media file 212. Such content time stamp file 214 may be uploaded and stored to the UGC server 224, though the content time stamp file 214 may be stored on any server, a cloud server, any console 228, or any user device 130.

Concurrent to the content recorder 202 receiving and recording content from the interactive content title 230, an object library 204 receives object data from the interactive content title 230, and an object recorder 206 tracks the object data to determine when an object beings and ends. Such object data may be uploaded periodically and/or in real-time or close to real-time. The object library 204 and the object recorder 206 may be implemented on the platform server 120, a cloud server, or on any of the servers 218. When the object recorder 206 detects an object beginning, the object recorder 206 receives object data (*e.g.,* user interaction with the object, object ID, object start times, object end times, object results, object types, etc.) from the object library 204 and records the object data onto an object ring-buffer 208 (*e.g.,* ObjectlD1, START_TS; ObjectlD2, START_TS; ObjectlD3, START_TS). Such object data recorded onto the object ring-buffer 208 may be stored in an object file 216.

Such object file 216 may also include object start times, object end times, an object ID, object results, object types (*e.g.,* competitive match, quest, task, etc.), user or peer data related to the object. For example, an object file 216 may store data regarding an activity, an in-game item, a zone, an actor, a mechanic, a game media, as will be discussed in detail with respect to FIG. 3. Such object file 216 may be stored on the object server 226, though the object file 216 may be stored on any server, a cloud server, any console 228, or any user device 130.

Such object data (*e.g.,* the object file 216) may be associated with the content data (*e.g.,* the media file 212 and/or the content time stamp file 214). In one example, the object server 226 stores and associates the content time stamp file 214 with the object file 216 based on a match between the streaming ID of the content time stamp file 214 and a corresponding activity ID of the object file 216. In another example, the object server 226 may store the object file 216 and may receive a query from the UGC server 224 for the object file 216. Such query may be executed by searching for an activity ID of the object file 216 that matches a streaming ID of a content time stamp file 214 transmitted with the query. In yet another example, a query of stored content time stamp files 214 may be executed by matching a start time and end time of a content time stamp file 214 with a start time and end time of a corresponding object file 216 transmitted with the query. Such object file 216 may also be associated with the matched content time stamp file 214 by the UGC server 224, though the association may be performed by any server, a cloud server, any console 228, or any user device 130. In another example, an object file 216 and a content time stamp file 214 may be associated by the console 228 during creation of each file 214, 216.

As shown in the example table 300 of FIG. 3, such object data (*e.g.,* the object file 216) may be associated with event information regarding activity availability change and may be related to other objects with associated object information. Media-object bindings may form telemetry between the objects shown in at least a portion of the streaming media and the streaming media. For example, such object data may be activity data 302, zone data 304, actor data 306, mechanics data 308, game media data 310, and other gameplay-related data.

Such object data (*e.g.,* the object file 216) may be categorized as in in progress, openended, or competitive. Such activity data 302 may include optional properties, such as a longer description of the activity, an image associated with the activity, if the activity is available to players before launching the game, whether completion of the activity is required to complete the game, whether the activity can be played repeatedly in the game, and whether there are nested tasks or associated child activities. Such activity data 302 may include an activity availability change event for, which may indicate a list or array of currently available activities for the player. For example, this may be used to decide what activities to display in a game plan.

Such zone data 304 may indicate an area of an associated game world with a single coordinate system wherein the zone may have a 2-D map associated with it and may be used to display locations on the zone. If zone data 304 are applicable, each zone may include a zone ID and a short localizable name of the Zone. Such zone data 304 may be associated with a view projection matrix (4×4) to convert from 3-D world coordinates to a 2-D map position. Such zone data 304 may be associated with a location change event that indicates an update to a current in-game location of the player. Such location change event may be posted regularly, or whenever the player's in-game location changes significantly. The platform server 120 may store a latest value in 'state.' Such zone data 304 may include an x, y, z position of the player's avatar in the zone as well as an a, b, c vector indicating the player's avatars orientation or direction. Such zone data 304 may be associate with an activity start event and/or an activity end event and for the activity end event, an outcome of completed, failed, or abandoned may be associated to the activity (*e.g.,* activity ID).

Such actor data 306 may be associated with an entity with behaviors in the game and can be player-controller or game-controlled, and can change dynamically during gameplay. Such actor data 306 may include an actor ID for the actor, a localizable name for the actor, an image of the actor, and/or a short description of the actor. Such actor data 306 may be associated with an actor select event that indicates that the player's selected actor(s) have changed. The selected actor(s) may represent the actors the player is controlling in the game and may be displayed on the player's profile and other spaces via the platform server 120. There may be more than one actor selected at time and each game may replace its list of actors upon loading save data.

Such mechanics data 308 may be associated with an item, skill, or effect that can be used by the player or the game to impact gameplay (*e.g.,* bow, arrow, stealth attack, fire damage) and may exclude items that do no impact gameplay (*e.g.,* collectibles). Such mechanics data 308 may include a mechanic ID of the mechanic, a short name of the mechanic, an image of the mechanic, and/or a short description of the mechanic. Such mechanics data 308 may be associated with a mechanic availability change event that indicates that the mechanics available to the player have changed. Available may mean that the mechanic is available in the game world for the player to use, but may require the player to go through some steps to acquire it into inventory (*e.g.,* buy from a shop, pick up from the world) before using it. Each game may replace its list of mechanics upon loading save data.

Such mechanics data 308 may be associated with a mechanic inventory change event that indicates that the player's inventory has changed. Inventory may refer to mechanics that are immediately usable to the player without having to take additional steps in the game before using it. Inventory information is used to estimate a player's readiness for various activities, which may be forwarded to the platform server 120. Games may replace its list of mechanic inventory upon loading save data. Mechanics on cool down may be considered part of the inventory. Mechanic counts (e.g., ammunition, healing points) with any non-zero value may be treated as "in inventory." Inventory mechanics may be considered a subset of available mechanics.

Such mechanics data 308 may be associated with a mechanic use event that indicates that a mechanic has been used by or against the player and may be used to be displayed as mechanic usage in a UGC context. Such mechanics data 308 may include a list or array of mechanics that were used (*e.g.,* fire arrow, fire damage) or whether an initiator is the player, such that whether the mechanics were used by or against the player. Such mechanics data 308 may include an initiator actor ID, a current zone ID of the initiator actor, and/or a current x, y, z position of the initiator actor. Such mechanics data 308 may be associated with a mechanic impact event that indicates that a mechanic had impact on gameplay (*e.g.,* an arrow hit an enemy) and may be used to display mechanic image in a UGC context. Mechanic use and mechanic image events may be not linked. Such mechanics data 308 may include the initiator action ID, the current zone ID of the initiator actor, the current x, y, z position of the initiator actor, a target actor ID, a current zone ID of the target actor, a current x, y, z of the target actor, and a mitigation mechanic that may mitigate the initiator mechanic.

Such game media data 310 may include a game media ID of the game media, a localizable name for the game media, a media format (*e.g.,* image, audio, video, text, etc.), a category or type of media (cut-scene, audiolog, poster, developer commentary, etc.), a URL or a server-provisioned media file, and/or whether the game media is associated with a particular activity. Such game media data 310 may be associated with a game media start event that indicates that a particular piece of game media has started in the game right now and a game media end event that indicates that the particular piece of game media has ended.

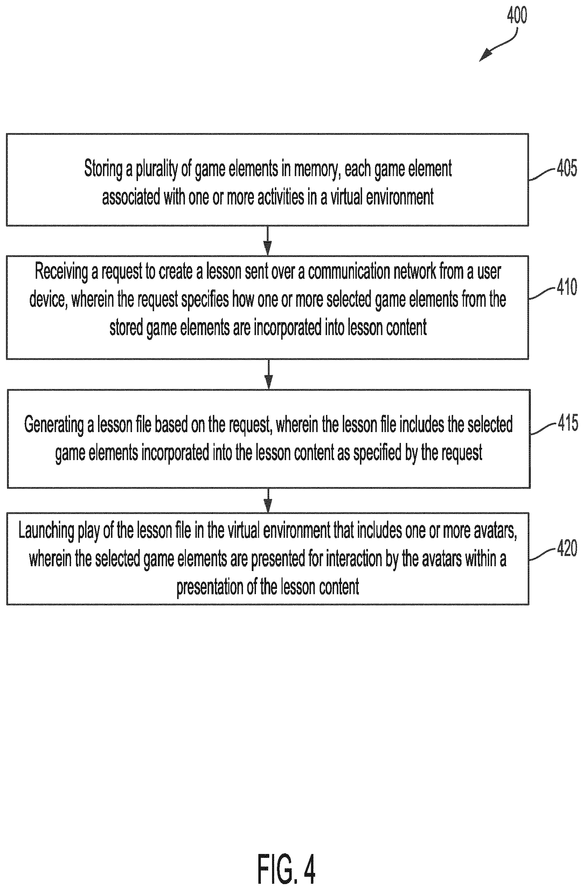

FIG. 4 is a flowchart illustrating an exemplary method for providing lessons in virtual environments. The methods 400 of FIG. 4 may be embodied as executable instructions in a non-transitory computer readable storage medium including but not limited to a CD, DVD, or non-volatile memory such as a hard drive. The instructions of the storage medium may be executed by a processor (or processors) to cause various hardware components of a computing device hosting or otherwise accessing the storage medium to effectuate the method. The steps identified in FIG. 4 (and the order thereof) are exemplary and may include various alternatives, equivalents, or derivations thereof including but not limited to the order of execution of the same.

At step 410, a plurality of game elements in memory, each game element associated with one or more activities in a virtual environment is stored in memory. Each game element may reference one or more activities in game titles and be associated with a set of data associated with one or more activities in a virtual environment associated with an interactive content title or game title. For example, a game element may reference two activities associated with a particular game title, the two activities may have been selected to be associated with a same game element because the two activities share common characteristics, for example, both activities require an understanding of a particular subject matter.

At step 420, a request to create a lesson may be sent over a communication network from a user device. The request may specify how one or more selected game elements from the stored game elements are incorporated into lesson content. The request may simply store a reference to the game element as an incorporation into the lesson content. The reference may require the game element to be launched at a particular point during the lesson content or may be launched when the teacher user account sends instructions to do so. The request may select an option that the game element be presented concurrently to another aspect of the lesson content or another option that when the game element is presenting in full screen, no other windows may be accesses, such as when the game element is a quiz.

At step 430, a lesson file may be generated based on the request, wherein the lesson file includes the selected game elements incorporated into the lesson content as specified by the request. The selected game elements being incorporated into the lesson content may include references to a starting point of associated activities of game titles. When an activity of a selected game element is launched for one or more of the student user accounts, the student user account may be given temporary access to the activity, the associated interactive content title, and the associated interactive content source servers 110, such as via an API 160 that corresponds to the lesson plan server 170.

At step 440, play of the lesson file in the virtual environment that includes one or more avatars may be launched, wherein the selected game elements are presented for interaction by the avatars within a presentation of the lesson content. The selected game elements may be presented for interaction by the avatars within a presentation of the lesson content. The lesson file that is played may include custom data that was added by the teacher user account, such as slides, links to websites, video clips, etc. The lesson file may further include an indication that the teacher user account will be presenting live during the play of the lesson file such that during play of the lesson file, the teacher user account may be provided the option to turn on their video communication device. The video communication device may further include a motion capture device such that a teacher's motions are mirrored to an avatar such that it appears that the avatar is presenting the lesson content. The motions may further be captured into motion capture data that identifies one or more body parties being moved. The movements may be a series of movements that are synchronized to the lesson content.

FIG. 5 is a block diagram of an exemplary electronic entertainment system that may be used in embodiments of the present invention. Entertainment system 500 may be an electronic game console. Alternatively, the entertainment system 500 may be implemented as a general-purpose computer, a set-top box, a hand-held game device, a tablet computing device, or a mobile computing device or phone. Entertainment systems may contain more or less operating components depending on a particular form factor, purpose, or design.

The CPU 510, the vector unit 515, the graphics processing unit 520, and the I/O processor 525 of FIG. 5 communicate via a system bus 585. Further, the CPU 510 of FIG. 5 communicates with the main memory 505 via a dedicated bus 580, while the vector unit 515 and the graphics processing unit 520 may communicate through a dedicated bus 590. The CPU 510 of FIG. 5 executes programs stored in the OS ROM 555 and the main memory 505. The main memory 505 of FIG. 5 may contain pre-stored programs and programs transferred through the I/O Processor 525 from a CD-ROM, DVD-ROM, or other optical disc (not shown) using the optical disc control unit 570. I/O Processor 525 of FIG. 5 may also allow for the introduction of content transferred over a wireless or other communications network (e.g., 4G, LTE, 3G, and so forth). The I/O processor 525 of FIG. 5 primarily controls data exchanges between the various devices of the entertainment system 500 including the CPU 510, the vector unit 515, the graphics processing unit 520, and the controller interface 535.

The graphics processing unit 520 of FIG. 5 executes graphics instructions received from the CPU 510 and the vector unit 515 to produce images for display on a display device (not shown). For example, the vector unit 515 of FIG. 5 may transform objects from three-dimensional coordinates to two-dimensional coordinates, and send the two-dimensional coordinates to the graphics processing unit 520. Furthermore, the sound processing unit 560 executes instructions to produce sound signals that are outputted to an audio device such as speakers (not shown). Other devices may be connected to the entertainment system 500 via the USB interface 545, and the IEEE 1394 interface 550 such as wireless transceivers, which may also be embedded in the system 500 or as a part of some other component such as a processor.

A user of the entertainment system 500 of FIG. 5 provides instructions via the controller interface 535 to the CPU 510. For example, the user may instruct the CPU 510 to store certain game information on the memory card 540 or other non-transitory computer-readable storage media or instruct a character in a game to perform some specified action.

The present invention may be implemented in an application that may be operable by a variety of end user devices. For example, an end user device may be a personal computer, a home entertainment system (*e.g.,* Sony PlayStation2^{®} or Sony PlayStation3^{®} or Sony PlayStation4^{®} Sony PlayStation5^{®}), a portable gaming device (*e.g.,* Sony PSP^{®} or Sony Vita^{®}), or a home entertainment system of a different albeit inferior manufacturer. The present methodologies described herein are fully intended to be operable on a variety of devices. The present invention may also be implemented with cross-title neutrality wherein an embodiment of the present system may be utilized across a variety of titles from various publishers.

The present invention may be implemented in an application that may be operable using a variety of devices. Non-transitory computer-readable storage media refer to any medium or media that participate in providing instructions to a central processing unit (CPU) for execution. Such media can take many forms, including, but not limited to, non-volatile and volatile media such as optical or magnetic disks and dynamic memory, respectively. Common forms of non-transitory computer-readable media include, for example, a floppy disk, a flexible disk, a hard disk, magnetic tape, any other magnetic medium, a CD-ROM disk, digital video disk (DVD), any other optical medium, RAM, PROM, EPROM, a FLASHEPROM, and any other memory chip or cartridge. Or

Various forms of transmission media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU. Various forms of storage may likewise be implemented as well as the necessary network interfaces and network topologies to implement the same.

The foregoing detailed description of the technology has been presented for purposes of illustration and description. It is not intended to be exhaustive or to limit the technology to the precise form disclosed. Many modifications and variations are possible in light of the above teaching. The described embodiments were chosen in order to best explain the principles of the technology, its practical application, and to enable others skilled in the art to utilize the technology in various embodiments and with various modifications as are suited to the particular use contemplated. It is intended that the scope of the technology be defined by the claim.

## Claims

1. A method for providing lessons in virtual environments, the method comprising:
storing a plurality of game elements in memory, each game element associated with one or more activities in a virtual environment;
receiving a request to create a lesson sent over a communication network from a user device, wherein the request specifies how one or more selected game elements from the stored game elements are incorporated into lesson content;
generating a lesson file based on the request, wherein the lesson file includes the selected game elements incorporated into the lesson content as specified by the request; and
launching play of the lesson file in the virtual environment that includes one or more avatars, wherein the selected game elements are presented for interaction by the avatars within a presentation of the lesson content.

2. The method of claim 1, further comprising providing the selected game element for interaction by the avatars in association with competition or testing content.

3. The method of claim 2, further comprising:
collecting results of the interaction with the competition or testing content for analysis; and
applying machine learning to the collected results over time to identify one or more patterns associated with the selected game element or the lesson content.

4. The method of claim 3, further comprising evaluating at least one of the avatars based on interaction associated with the competition or testing content by analyzing the interaction to identify one or more differences from the lesson content and using the identified differences to calculate a score for the at least one avatar.

5. The method of claim 1, wherein the game elements are associated with a plurality of different game titles, and herein the selected game elements are from different game titles.

6. The method of claim 1, wherein the lesson content includes at least one of pre-recorded content and designations for content to be presented live during play of the lesson file by an avatar associated with a teacher role.

7. The method of claim 1, wherein the lesson content includes motion capture data regarding a series of movements, and wherein generating the lesson file comprises:
analyzing the motion capture data to identify one or more body parts being moved during each movement in the series; and
generating an avatar with corresponding body parts animated to move in accordance with each identified movement in the series, wherein each of the identified movements by the avatar is synchronized to lesson content associated with the respective movement.

8. A system for providing lessons in virtual environments, the system comprising:
memory that stores a plurality of game elements in memory, each game element associated with one or more activities in a virtual environment;
a communication interface that receives a request to create a lesson sent over a communication network from a user device, wherein the request specifies how one or more selected game elements from the stored game elements are incorporated into lesson content; and
a processor that executes instructions stored in memory, wherein the processor executes instructions to:
generate a lesson file based on the request, wherein the lesson file includes the selected game elements incorporated into the lesson content as specified by the request; and
launch play of the lesson file in the virtual environment that includes one or more avatars, wherein the selected game elements are presented for interaction by the avatars within a presentation of the lesson content.

9. The system of claim 8, wherein the processor further executes instructions to provide the selected game element for interaction by the avatars in association with competition or testing content.

10. The system of claim 9, wherein the processor further executes instructions to:
collect results of the interaction with the competition or testing content for analysis; and
apply machine learning to the collected results over time to identify one or more patterns associated with the selected game element or the lesson content.

11. The system of claim 10, wherein the processor further executes instructions to evaluate at least one of the avatars based on interaction associated with the competition or testing content by analyzing the interaction to identify one or more differences from the lesson content and using the identified differences to calculate a score for the at least one avatar.

12. The system of claim 8, wherein the game elements are associated with a plurality of different game titles, and herein the selected game elements are from different game titles.

13. The system of claim 8, wherein the lesson content includes at least one of pre-recorded content and designations for content to be presented live during play of the lesson file by an avatar associated with a teacher role.

14. The system of claim 13, wherein the lesson content includes motion capture data regarding a series of movements, and wherein the processor generates the lesson file by:
analyzing the motion capture data to identify one or more body parts being moved during each movement in the series; and
generating an avatar with corresponding body parts animated to move in accordance with each identified movement in the series, wherein each of the identified movements by the avatar is synchronized to lesson content associated with the respective movement.

15. A non-transitory, computer-readable storage medium having embodied thereon a program executable by a processor to perform a method for providing lessons in virtual environments, the method comprising:
storing a plurality of game elements in memory, each game element associated with one or more activities in a virtual environment;
receiving a request to create a lesson sent over a communication network from a user device, wherein the request specifies how one or more selected game elements from the stored game elements are incorporated into lesson content;
generating a lesson file based on the request, wherein the lesson file includes the selected game elements incorporated into the lesson content as specified by the request; and
launching play of the lesson file in the virtual environment that includes one or more avatars, wherein the selected game elements are presented for interaction by the avatars within a presentation of the lesson content.
